# EUROPEAN PATENT APPLICATION

(11) **EP 4 249 857 A1**
(43) Date of publication of application: **27.09.2023**
(21) Application number: 22905462.2
(22) Date of filing: 05.07.2022
(51) Int. Cl.: G01D 5/347

(54) **MULTI-GROUP VERNIER CODE DISC, PHOTOELECTRIC ENCODER AND LIGHT SOURCE POSITION RESOLVING METHOD**

(30) Priority: 15.12.2021 CN 202111538411
(71) Applicant: Suzhou Inovance Control Technology Co., Ltd., Suzhou, Jiangsu 215000 (CN)
(72) Inventor: ZHOU, Kai, Suzhou, Jiangsu 215000 (CN)
(74) Representative: Osterhoff, Utz
(86) International application number: PCT/CN2022/103993
(87) International publication number: WO 2023/109100

(57) **Abstract**

The present application discloses a code disc with multiple vernier groups, a photoelectric encoder, and a method for determining a position of a light source. The code disc with multiple vernier groups including: a vernier ring with a rotation center of the code disc with multiple vernier groups as a center; the vernier ring includes multiple vernier groups (10) connected end-to-end; identification code channels (20) are provided with identification code channels equal in number to vernier groups (10); a first phase difference is provided between the starting ends of any two identification code channels (20); and a second phase difference is provided between a starting end of each identification code channel (20) and a starting end of the corresponding vernier group (10).

## Description

### CROSS-REFERENCE TO RELATED APPLICATIONS

The present application claims priority to Chinese Patent Application No. 202111538411.2, filed on December 15, 2021.

### TECHNICAL FIELD

The present application relates to the field of encoder technology, particularly to a code disc with multiple vernier groups, a photoelectric encoder and a method for determining a position of a light source.

### BACKGROUND

With the rapid development of industrial control technology and the continuous upgrading of manufacturing industries, a huge market is provided for the development of servo industries. As a feedback device in servo systems, encoders effectively improve their working accuracy. Absolute rotary encoders, due to their unique absolute position and their resistance to interference, are widely used in various industrial systems for angle measurement, length measurement, and positioning control. With the demand for high-precision processing, there are significant technical requirements for the effective resolution of encoders.

Conventional photoelectric encoders only depict one group of vernier code channels on the code disc, however, on a code disc with the same area, the more the code channels, the narrower the code channels. If the code channels are too narrow, analog signals become highly sensitive to light signals, and in addition to the error of the number conversion itself and the influence of circuit noise, even if the converted result has only a slight error compared to the true value, in the case of densely distributed code channels in the vernier, it will cause absolute positioning errors. Currently photoelectric encoders with high physical resolution in the market have absolute positioning calculation errors when calculating the position of the light source on the code disc.

The above content is only used for assisting understanding the technical solution of the present application, but doesn't acknowledge that above content is related art.

### SUMMARY

The main purpose of the present application is to provide a code disc with multiple vernier groups, a photoelectric encoder and a method for determining a position of a light source, to solve a problem that the existing photoelectric encoders with high physical resolution have absolute positioning calculation errors when calculating the position of the light source on the code disc.

In order to achieve the above purpose, the present application provides a code disc with multiple vernier groups, including: a vernier ring with a rotation center of the code disc with multiple vernier groups as a center, wherein the vernier ring includes the multiple vernier groups connected end-to-end;
an inside and/or outside of the vernier ring being provided with identification code channels equal in number to vernier groups, where a first phase difference is provided between starting ends of any two identification code channels, and a second phase difference is provided between a starting end of each identification code channel and a starting end of a corresponding vernier group.

In addition, in order to achieve the above purpose, the present application also provides a photoelectric encoder, which includes the code disc with multiple vernier groups above-mentioned.

In addition, in order to achieve the above purpose, the present application also provides a method for determining a position of a light source, which includes:
obtaining a current main analog quantity of a main code channel and a current vernier analog quantity of a vernier code channel in a vernier group where the light source is located;
determining an initial position information of the light source in the vernier group based on the current main analog quantity and the current vernier analog quantity;
obtaining level state information of each identification code channel;
determining vernier group information where the light source is located based on the level state information and the initial position information; and
determining a target position information of the light source on a code disc based on the initial position information and the vernier group information.

One or more embodiments of the present application are provided in details in the following figures and description, other features, purposes and advantages of the present application become obvious from the description, drawings and claims.

### BRIEF DESCRIPTION OF THE DRAWINGS

In order to further illustrate the technical solutions of the embodiments in the present application or in the related art, a brief introduction will be given to the drawings needed in the embodiments or descriptions in the prior art below. Obviously, the drawings described below are merely some embodiments of the present application, and those skilled in the art can obtain other drawings based on the structures shown in these drawings without any creative labor.
FIG. 1 is a schematic structural view of a first embodiment of a code disc with multiple vernier groups according to the present application.
FIG. 2 is a schematic view of a first structure of a second embodiment of the code disc with multiple vernier groups according to the present application.
FIG. 3 is a schematic diagram of the connection of the vernier groups in the second embodiment of the code disc with multiple vernier groups according to the present application.
FIG. 4 is a schematic diagram of a second structure of the second embodiment of the code disc with multiple vernier groups according to the present application.
FIG. 5 is a schematic diagram of a third structure of the second embodiment of the code disc with multiple vernier groups according to the present application.
FIG. 6 is a flowchart of a first embodiment of a method for determining a position of the light source according to the present application.

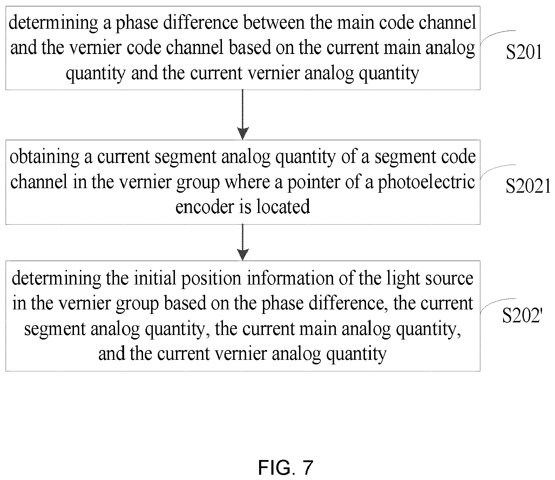

FIG. 7 is a flowchart of a second embodiment of a method for determining the position of the light source according to the present application.

### Description for reference signs

| Reference sign | Name | Reference sign | Name |
|---|---|---|---|
| 10 | vernier group | 20 | identification code channel |
| 30 | zero graduation line | 110 | first vernier group |

| | | | |
|---|---|---|---|
| 120 | second vernier group | 210 | first identification code channel |
| 220 | second identification code channel | 101 | vernier code channel |
| 102 | main code channel | 103 | segment code channel |
| A | first identification area | B | second identification area |
| C | third identification area | D | fourth identification area |
| ψ1 | first phase difference | Ψ2 | second phase difference |

The implementation of the purpose, functional features, and advantages of the present application will be further explained with reference to the embodiments and the accompanying drawings.

### DETAILED DESCRIPTION OF THE EMBODIMENTS

It should be understood that the specific embodiments described herein are only for explaining the present application and are not intended to limit the present application.

The following will describe the technical solution in the embodiments of the present application clearly and completely with reference to the accompanying drawings.

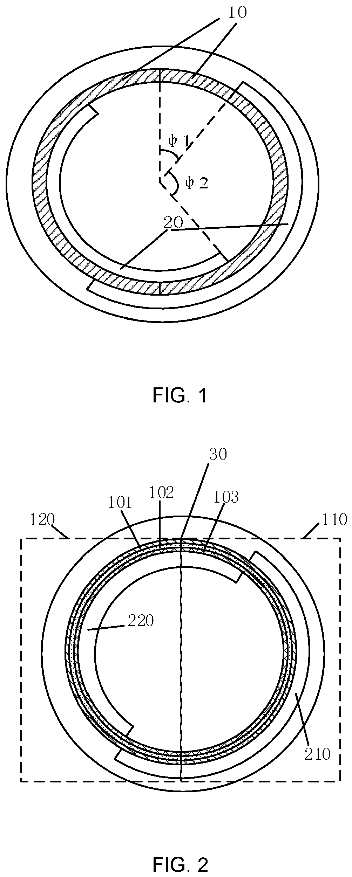

Referring to FIG. 1, FIG. 1 is a schematic diagram of the second electrode layer structure of the first embodiment of the code disc with multiple vernier groups according to the present application.

In the embodiment, the code disc with multiple vernier groups includes: a vernier ring with a rotation center of the code disc with multiple vernier groups as a center, and the vernier ring includes multiple vernier groups 10 connected end-to-end. Identification code channels 20 equal in number to the vernier groups 10 are arranged inside and/or outside the vernier ring, and a first phase difference ψ1 is provided between the starting ends of any two identification code channels. A second phase difference ψ2 is provided between the starting end of each identification code channel 20 and the starting end of the corresponding vernier group 10.

It should be noted that the code disc of a photoelectric encoder typically includes a vernier group 10, and the number of code channels in the vernier group needs to increase when adjusting the accuracy of the encoder. Increasing the number of code channels often reduces the width of the code channel when the area of the vernier group 10 is unchanged, such that the code channels become denser to cause analog signals inside the code channels more sensitive to the signal of the light source.

It should be understood that the vernier ring is a circular structure composed of multiple vernier groups 10 connected end-to-end. The number of the vernier group 10 can be two, three, four, and so on. In the solution, the vernier group 10 can include a vernier code channel and a main code channel. The vernier is a movable micrometer. The vernier group 10 on the code disc uses the phase difference between the vernier code channel and the main code channel to accurately measure the position of the light source on the code disc. The specific use method of the vernier group is the same as that of a vernier caliper, and the specific principle can refer to the vernier caliper and will not be repeated here.

In the embodiment, the second phase difference ψ2 between the starting end of each identification code channel 20 and the starting end of the corresponding vernier group 10 can be the same or different, which can be determined according to actual conditions and will not be limited in the specification. The second phase difference ψ2 between the starting end of each identification code channel 20 and the starting end of the corresponding vernier group 10 can be used to distinguish the angular position information on the code disc corresponding to the vernier group 10 and the identification code channel 20. The above second phase difference ψ2 can be a value greater than 0, for example, 45 degrees, 60 degrees, 90 degrees, 180 degrees, and so on, which can be determined according to actual conditions and will not be limited in the specification.

In the embodiment, the identification code channel 20 may be configured to equate the code disc into a plurality of areas to determine a position of the vernier group 10 on the code disc. When the trace of the light source left on the code disc is located on the identification code channel 20, the identification code channel 20 that includes the trace and the identification code channel that does not include the trace will output different signals. For example, if the trace is located on the first identification code channel, the first identification code channel may output a high level signal, and the other identification code channels output a low level signal. The identification code channel 20 can be provided inside or outside the vernier ring, but the vernier code channel can also be set separately, partly inside the vernier ring and partly outside the vernier ring. The identification code channel 20 does not need to carry out analog-to-digital conversion, but can identify the current state of the current identification code channel by inputting the signal to the comparator circuit. The identification code channel 20 can be in a bright state and a dark state, or a high level state and a low level state, etc.

In the embodiment, the angle occupied by each identification code channel 20 on the code disc can be the same or different, which can be determined according to the actual situation, and will not be limited in the specification. A first phase difference ψ1 is provided between the starting ends of any two adjacent identification code channels 20. The first phase difference ψ1 between the starting ends of any two adjacent identification code channels 20 can be the same or different. The first phase difference ψ1 mentioned above can be a value greater than 0, such as 45 degrees, 60 degrees, 90 degrees, 180 degrees, etc. The specific value can be determined according to the actual situation, which will not be limited in the embodiment of the specification.

In the specific implementation, when the light source passes through the code disc and illuminates on the PCB board, a certain trace of the light source will be left on the code disc. The trace of the light source passing through the code disc of multiple vernier groups is always located on a determined vernier group 10.

The position of the trace of the light source can be measured by using the vernier group 10, to determine the initial position information of the trace of the light source on the vernier group 10. By obtaining the level state information of each identification code channel 20, the identification code channel 20 where the trace of the light source is located can be determined according to the level state information. Different identification code channels 20 correspond to different areas on the code disc. Based on the area position information corresponding to the area and the initial position information of the trace of the light source on the vernier group, the accurate position of the trace of the light source on the code disc can be determined.

In one embodiment, for example, there are three vernier groups 10 and three identification code channels 20 set on the code disc. The first vernier group occupies a 120-degree fan-shaped area from 0 to 120 degrees on the code disc; the second vernier group occupies a 120-degree fan-shaped area from 120 to 240 degrees; and the third vernier group occupies a 120-degree fan-shaped area from 240 to 360 degrees. The starting ends of the three identification code channels 20 are spaced 60 degrees relative to the starting ends of the corresponding vernier groups 10. At this time, the first identification code channel occupies a 120-degree fan-shaped area from 60 to 180 degrees; the second identification code channel occupies a 120-degree fan-shaped area from 180 to 300 degrees; and the third identification code channel occupies a 120-degree fan-shaped area from 300 to 360 degrees and 0 to 60 degrees.

In the embodiment, when determining the position of the trace of the light source, the position of the light source on the vernier group can be determined based on the vernier group where the trace of the light source is located. For example, if the trace of the light source is located at the initial position of 80 degrees on the vernier group, the state of the identification code channel is then obtained. If the third identification code channel outputs a high level signal while the other two identification code channels output low level signals, then the trace of the light source is in the area corresponding to the third identification code channel. The area corresponding to the third identification code channel is a 120-degree fan-shaped area between 300 to 360 degrees and 0 to 60 degrees. The 300 to 360 degrees corresponding to the third identification code channel belongs to the 60 to 120 degrees of the third vernier group, while the 0 to 60 degrees corresponding to the third identification code channel belongs to the 0 to 60 degrees of the first vernier group. Since the trace of the light source is located at the 80 degree on the vernier group, it can be determined that the trace of the light source is on the third vernier group and is located at the 80 degrees on the third vernier group. Combined with the specific position on the code disc, the target position corresponding to the trace of the light source can be obtained, which is at the 320 degrees clockwise from the zero graduation line.

The initial position refers to the position of the trace of the light source on the corresponding vernier group when passing through the code disc, while the target position refers to the specific position of the trace of the light source on the code disc.

The embodiment provides a code disc with multiple vernier groups, which includes a vernier ring with the rotation center of the code disc with multiple vernier groups as the center. The vernier ring includes multiple vernier groups connected end-to-end. The inside and/or outside of the vernier ring is provided with identification code channels equal in number to vernier groups, and a first phase difference is provided between the starting ends of any two identification code channels. A second phase difference is provided between the starting end of each identification code channel and the starting end of the corresponding vernier group. By increasing the number of vernier groups and setting identification code channels, the initial position of the light source on the corresponding vernier group can be determined, and then the target position of the light source on the code disc can be determined based on the identification code channel and the initial position, which can more accurately calculate the position of the light source on the code disc with multiple vernier groups.

Based on the first embodiment of the code disc with multiple vernier groups described above, a second embodiment of the code disc with multiple vernier groups is proposed in the present application.

In the embodiment, the vernier group includes a main code channel 102, a vernier code channel 101, and a segment code channel 103 all provided with the rotation center of the code disc with multiple vernier groups as the center. The main code channel 102 and the vernier code channel 101 are configured to measure a specific position of the trace of the light source on the vernier group. The unit scale between the main code channel 102 and the vernier code channel 101 has a certain first unit phase difference, and the segment code channel 103 has a certain second unit phase difference between the vernier code channel 101. By setting the main code channel 102, the vernier code channel 101, and the segment code channel 103, it is equivalent to using multiple calipers to measure an object simultaneously, which can obtain the initial position of the trace of the light source more accurately. In practical implementation, the principle of measuring distance using a caliper can be used to obtain the initial position of the trace of the light source on the current vernier group through the main code channel 102, the vernier code channel 101, and the segment code channel 103.

Referring to FIG. 2, in the embodiment, the multiple vernier groups 10 include a first vernier group 110 and a second vernier group 120, the starting end of the first vernier group 110 is connected to the ending end of the second vernier group 120. The first vernier group 110 is provided on a side of the zero graduation line 30 of the code disc with multiple vernier groups, and the second vernier group 120 is provided on another side of the zero graduation line 30 of the code disc with multiple vernier groups.

The identification code channel 20 includes a first identification code channel 210 and a second identification code channel 220. The starting end of the first identification code channel 210 is provided to rotate the preset angle clockwise or counterclockwise relative to the starting end of the first vernier group 110, and the starting end of the second identification code channel 220 is provided to rotate the preset angle clockwise or counterclockwise relative to the starting end of the second vernier group 120.

It should be noted that in FIG. 2, the two vernier groups and two vernier code channels are used to illustrate the embodiment. In some embodiments, as shown in FIG. 2, the starting end of the first identification code channel 210 can be rotated clockwise by the preset angle relative to the starting end of the corresponding first vernier group 110, and the starting end of the second identification code channel 220 can also be rotated clockwise by the preset angle relative to the starting end of the corresponding second vernier group 120. Of course, the first identification code channel 210 can also be rotated counterclockwise by the preset angle relative to the starting end of the corresponding first vernier group 110, and the second identification code channel 220 can also be rotated counterclockwise by the preset angle relative to the starting end of the corresponding second vernier group 120. In some embodiments, other possible ways can be used to set the first identification code channel 210 and the second identification code channel 220, and the specific method can be determined according to the actual situation, which is not limited in this specification.

In one embodiment, the first vernier group 110 can occupy a 180-degree fan-shaped area from 0 to 180 degrees on the code disc starting from zero graduation line 30, while the second vernier group 120 can occupy a 180-degree fan-shaped area from 180 to 360 degrees. The starting ends of the two identification code channels are both offset by 45 degrees from the starting end of their corresponding vernier groups, but other angles are also possible and not specifically limited here. In this case, the first identification code channel occupies a 180-degree fan-shaped area from 45 to 225 degrees, while the second identification code channel occupies a 180-degree fan-shaped area from 225 to 360 degrees and from 0 to 45 degrees.

In the embodiment, when determining the position of the trace of the light source, the position of the light source on the vernier group can be determined based on which vernier group is the trace of the light source located on. For example, if the trace of the light source is at the initial position of 120 degrees on the vernier group, the state of the identification code channel can be obtained. If the first identification code channel 210 outputs a high level signal and the second identification code channel 220 outputs a low level signal, then the trace of the light source is located in the area from 45 to 225 degrees corresponding to the first identification code channel 210. The area from 45 to 180 degrees belongs to the first vernier group 110, while the area from 180 to 225 degrees belongs to the second vernier group 120 and spans from 0 to 45 degrees, at this time, since the initial position is 120 degrees, the trace of the light source is at 120 degrees of the first vernier group 110, to determine the target position of the trace on code disc with multiple vernier groups to be 120 degrees.

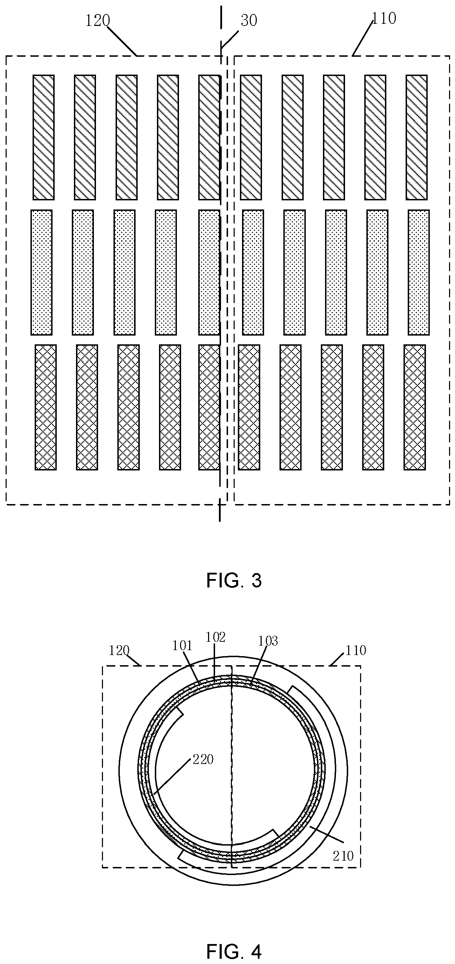

Referring to FIG. 3, in the embodiment, the first vernier group 110 is provided at the right of the zero graduation line 30, while the second vernier group 120 is provided at the left of the zero graduation line 30. The starting end of the first vernier group 110 is connected to the ending end of the second vernier group 120 at the zero graduation line 30.

Referring to FIG. 4, in the embodiment, the starting end of the first identification code channel 210 is provided to rotate the preset angle clockwise relative to the starting end of the first vernier group 110; the starting end of the second identification code channel 220 is provided to rotate the preset angle counterclockwise rotation relative to the starting end of the second vernier group 120. In the embodiment, the first identification code channel 210 is provided outside the vernier ring, and the second identification code channel 220 is provided inside the vernier ring. Of course, it can be understood that in some embodiments, the first identification code channel may also be set inside the vernier ring, and the second identification code channel may be set outside the vernier ring. The specific setting can be determined according to the actual situation, which will not be limited in the specification.

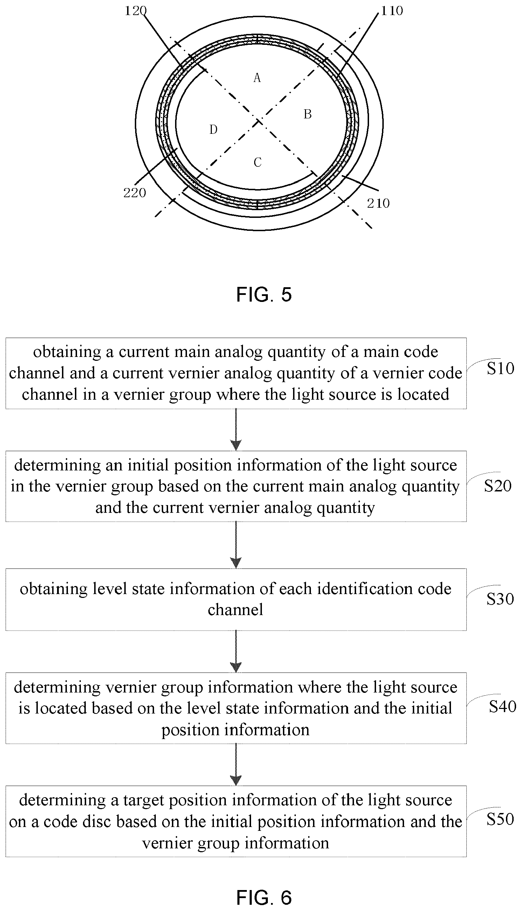

In the specific implementation, as shown in FIG. 5, the first identification code channel 210 and the second identification code channel 220 divide the code disc with multiple vernier groups into four areas equally: the first identification area A, the second identification area B, the third identification area C, and the fourth identification area D. It should be noted here that neither the first identification code channel 210 nor the second identification code channel 220 includes the first identification area A, but both the first identification code channel 210 and the second identification code channel 220 include the third identification area D.

When both the first identification code channel 210 and the second identification code channel 220 output a low level, the trace of the light source on the code disc is in the first identification area A; when the first identification code channel 210 outputs a high level and the second identification code channel 220 outputs a low level, the trace of the light source on the code disc is in the second identification area B; when both the first identification code channel 210 and the second identification code channel 220 output a high level, the trace of the light source on the code disc is in the third identification area C; when the first identification code channel 210 outputs a low level and the second identification code channel 220 outputs a high level, the trace of the light source on the code disc is in the fourth identification area D.

When the trace of the light source is in the second identification area B, it can be directly determined that the trace of the light source is in the first identification code channel 210. Similarly, when the trace of the light source is in the fourth identification area D, it can be directly determined that the trace of the light source is in the second identification code channel 220. When the trace of the light source is in the first identification area A or the fourth identification area D, it is necessary to determine it based on the initial position of the trace of the light source on the corresponding vernier group. For example, when the preset area is 45 degrees, if the initial position is between 0 to 45 degrees, the trace of the light source is in the first identification area A; if the initial position is between 135 to 180 degrees, the trace of the light source is in the second identification area B. The same is true in the third identification area C, which will not be repeated herein.

The embodiment provides a code disc with multiple vernier groups, which includes a vernier ring with the rotation center of the code disc with multiple vernier groups as its center, and the vernier ring includes multiple vernier groups connected end-to-end. Identification code channels equal in number to the vernier groups are set inside and/or outside the vernier ring, a first phase difference is provided between the starting ends of any two identification code channels and a second phase difference is provided between the starting end of each identification code channel and the starting end of the corresponding vernier group. By increasing the number of vernier groups and setting identification code channels, the initial position of the light source on the vernier group can be determined, and then the target position of the light source on the code disc can be determined based on the corresponding area and initial position of the identification code channel, to more accurately calculate the position of the light source on the code disc with multiple vernier groups.

In addition, to achieve the above objectives, the present application also provides a photoelectric encoder, which includes the above code disc with multiple vernier groups. The specific structure of the code disc with multiple vernier groups refer to the above embodiment, and since the photoelectric encoder adopts all the technical solutions of the above embodiments, it at least has all the functions brought by the technical solutions of the above embodiments, which will not be repeated here.

Furthermore, in order to achieve the above objectives, the present application also provides a method for determining a position of a light source. Referring to FIG. 6, which is a flowchart of a first embodiment of the method for determining the position of the light source according to the present application.

In the embodiment, the method for manufacturing the code disc with multiple vernier groups includes:
Step S10: obtaining a current main analog quantity of a main code channel and a current vernier analog quantity of a vernier code channel in a vernier group where the light source is located.

It should be noted that the current main analog quantity refers to the specific quantization value analoged on the main code channel in the current state, and the current vernier analog quantity refers to the specific quantization value analoged on the vernier code channel in the current state. The current main analog quantity is equivalent to the quantization value of the main ruler in the vernier caliper, and the current vernier analog quantity is equivalent to the quantization value of the vernier caliper.

In the specific implementation, the current main analog quantity and the current vernier analog quantity can be directly obtained by locating the trace of the light source at the corresponding scale position on the code disc with multiple vernier groups, or by other means, which are not limited.

Step S20: determining an initial position information of the light source in the vernier group based on the current main analog quantity and the current vernier analog quantity.

It should be noted that the initial position information refers to the position information of the trace of the light source in the vernier group where the light source is located. In the embodiment, the initial position information of the trace of the light source in the vernier group where the light source is located can be directly calculated through the calculation method of the vernier group when the current main analog quantity and the current vernier analog quantity are obtained. The calculation method of the vernier group is the same as the calculation method of the vernier caliper, which will be not described here.

Step S30: obtaining level state information of each identification code channel.

It should be noted that the level state information is the information used to reflect the current state of each identification code channel. The level state information can be the high level state or low level state corresponding to the identification code channel, or the lit state or extinguished state of the light-emitting device set by the identification code.

In the specific implementation, the level state information can be collected through a multimeter. Of course, the level state information can also be determined by collecting the bright state of each identification code channel.

Step S40: determining vernier group information where the light source is located based on the level state information and the initial position information.

It should be noted that in the embodiment, the voltage values corresponding to each identification code channel collected can be input to one input terminal of the comparator, and a reference voltage can be set at the other input terminal of the comparator. The level state information of each identification code channel can be determined based on the output result of the comparator. For example, when the voltage value of the voltage value information corresponding to the first identification code channel 210 is greater than the reference voltage, the comparator outputs a high level signal, which indicates that the trace of the light source is located on the first identification code channel 210; when the voltage value of the voltage value information corresponding to the second identification code channel 220 is less than the reference voltage, the comparator outputs a low level signal, which indicates that the trace of the light source is not located on the second identification code channel 220. Of course, when one identification code channel includes two vernier groups, which vernier group where the trace of the light source is specifically located can be determined based on the initial position information.

Step S50: determining a target position information of the light source on a code disc based on the initial position information and the vernier group information.

It should be noted that the target position information refers to the position information of the trace of the light source on the code disc through the code disc with multiple vernier groups. In the specific implementation, when the initial position information of the trace of the light source in the vernier group where the light source is located is determined, and the specific vernier group is determined based on the level state information and the initial position information, the specific location of the trace of the light source on the code disc with multiple vernier groups can be determined based on the corresponding areas of each vernier group on the code disc .

The embodiment provides a method for determining a position of a light source. The method includes: obtaining a current main analog quantity of a main code channel and a current vernier analog quantity of a vernier code channel in a vernier group where the light source is located; determining an initial position information of the light source in the vernier group based on the current main analog quantity and the current vernier analog quantity; obtaining level state information of each identification code channel; determining vernier group information where the light source is located based on the level state information and the initial position information; and determining a target position information of the light source on a code disc based on the initial position information and the vernier group information. In the embodiment, by increasing the number of vernier groups and setting identification code channels, the initial position of the light source in the vernier group can be determined based on multiple vernier groups. Furthermore, the target position of the light source on the code disc can be determined more accurately based on the identification code channel and the initial position, to determine the accurate position of the light source on code disc with multiple vernier groups.

A second embodiment of the method for determining the position of the light source is proposed based on the first embodiment of the method for determining the position of the light source.

In the embodiment, Step S20 includes:
Step S201: determining a phase difference between the main code channel and the vernier code channel based on the current main analog quantity and the current vernier analog quantity.

It should be noted that the phase difference refers to the difference between the unit phase of the main code channel and the unit phase of the vernier code channel. The unit phases of the main code channel and the vernier code channel can be directly calculated to determine the number of units of the main code channel and the vernier code channel, and the phase difference can be obtained based on the unit phases of the main code channel and the vernier code channel. Step S202: determining the initial position information of the light source in the vernier group based on the phase difference, the current main analog quantity, and the current vernier analog quantity.

It should be noted that when determining the phase difference, the current main analog quantity and the current vernier analog quantity, it is equivalent to directly obtaining the measurement value of the main ruler and the measurement value of the vernier caliper, and the unit precision of the vernier caliper, the initial position information of the light source in the vernier group can be obtained directly by calculation.

Before the Step S202, the method further includes:
Step S2021: obtaining a current segment analog quantity of a segment code channel in the vernier group where a pointer of a photoelectric encoder is located.

It should be noted that the current segment analog quantity refers to the quantization value analogized by the current segment code channel. The initial position information of the light source in the vernier group can be obtained more accurately by combining the current segment analog quantity with the current main analog quantity and the current vernier analog quantity.

Correspondingly, Step S202 includes:
Step S202': determining the initial position information of the light source in the vernier group based on the phase difference, the current segment analog quantity, the current main analog quantity, and the current vernier analog quantity.

The embodiment of the present application provides a method for determining the position of the light source. the method includes: obtaining a current main analog quantity of a main code channel and a current vernier analog quantity of a vernier code channel in a vernier group where the light source is located; determining an initial position information of the light source in the vernier group based on the current main analog quantity and the current vernier analog quantity; obtaining level state information of each identification code channel; determining vernier group information where the light source is located based on the level state information and the initial position information; and determining a target position information of the light source on a code disc based on the initial position information and the vernier group information. In the embodiment, by increasing the number of vernier groups and setting identification code channels, the initial position of the light source in the vernier group can be determined more accurately by introducing a segment code channel in the vernier group, and then the target position of the light source on the code disc can be determined based on the identification code channel and the initial position, to determine the accurate position of the light source on code disc with multiple vernier groups.

The above is only an embodiment of the present application, and does not limit the scope of the present application. Any equivalent structures or equivalent process transformations made based on the contents and drawings of the present application, or direct or indirect application to other related technical fields, are also included in the scope of the present application.

Obviously, the described embodiments are only a part of the embodiments of the present application, but not all embodiments. Based on the embodiments of the present application, all other embodiments obtained by those skilled in the art without creative labor are included in the scope of the present application.

It should be noted that all directional indications (such as up, down, left, right, front, back, etc.) in the embodiments of the present application are only used to explain the relative positional relationship and motion situation of each component under a specific posture (as shown in the drawings). If the specific posture changes, the directional indications will also change accordingly.

In addition, the description of "first", "second" etc. in the present application is only used to describe the purpose, and cannot be understood as indicating or implying the relative importance or the number of technical features indicated. Therefore, the features with "first", and "second" can implicitly or explicitly include at least one such feature. Moreover, the technical schemes of various embodiments can be combined with each other, but they must be achieved by those skilled in the art. When the combination of technical schemes conflicts with each other or cannot be achieved, it should be considered that the combination of this technical scheme does not exist and is not within the scope of the present application.

## Claims

1. A code disc with multiple vernier groups, **characterized by** comprising:
a vernier ring with a rotation center of the code disc with multiple vernier groups as a center, wherein the vernier ring comprises the multiple vernier groups connected end-to-end;
an inside and/or outside of the vernier ring being provided with identification code channels equal in number to vernier groups, wherein a first phase difference is provided between a starting end of each identification code channel, and a second phase difference is provided between the starting end of each identification code channel and a starting end of a corresponding vernier group.

2. The code disc according to claim 1, wherein the vernier group comprises a main code channel, a vernier code channel, and a segment code channel all provided with the rotation center of the code disc with multiple vernier groups as the center.

3. The code disc according to claim 1, wherein the multiple vernier groups comprise a first vernier group and a second vernier group, wherein a starting end of the first vernier group is connected to an ending end of the second vernier group; and
the first vernier group is provided on a side of a zero graduation line of the code disc with multiple vernier groups, and the second vernier group is provided on another side of the zero graduation line of the code disc with multiple vernier groups.

4. The code disc according to claim 3, wherein the identification code channel comprises a first identification code channel and a second identification code channel;
a starting end of the first identification code channel is provided to rotate a preset angle clockwise or counterclockwise relative to the starting end of the first vernier group; and
a starting end of the second identification code channel is provided to rotate the preset angle clockwise or counterclockwise relative to a starting end of the second vernier group.

5. The code disc according to claim 4, wherein the starting end of the first identification code channel is provided to rotate the preset angle clockwise relative to the starting end of the first vernier group; and
the starting end of the second identification code channel is provided to rotate the preset angle counterclockwise relative to the starting end of the second vernier group.

6. The code disc according to claim 4, wherein the first identification code channel is provided outside the vernier ring, and the second identification code channel is provided inside the vernier ring.

7. A photoelectric encoder, **characterized by** comprising any one of the code disc with multiple vernier groups according to any one of claims 1 to 6.

8. A method for determining a position of a light source, **characterized by** comprising:
obtaining a current main analog quantity of a main code channel and a current vernier analog quantity of a vernier code channel in a vernier group where the light source is located;
determining an initial position information of the light source in the vernier group based on the current main analog quantity and the current vernier analog quantity;
obtaining level state information of each identification code channel;
determining vernier group information where the light source is located based on the level state information and the initial position information; and
determining a target position information of the light source on a code disc based on the initial position information and the vernier group information.

9. The method according to claim 8, wherein the determining the initial position information of the light source in the vernier group based on the current main analog quantity and the current vernier analog quantity comprises:
determining a phase difference between the main code channel and the vernier code channel based on the current main analog quantity and the current vernier analog quantity; and
determining the initial position information of the light source in the vernier group based on the phase difference, the current main analog quantity, and the current vernier analog quantity.

10. The method according to claim 9, wherein before the determining the initial position information of the light source in the vernier group based on the phase difference, the current main analog quantity, and the current vernier analog quantity, the method further comprises:
obtaining a current segment analog quantity of a segment code channel in the vernier group where a pointer of a photoelectric encoder is located; and
the determining the initial position information of the light source in the vernier group based on the phase difference, the current main analog quantity, and the current vernier analog quantity comprises:
determining the initial position information of the light source in the vernier group based on the phase difference, the current segment analog quantity, the current main analog quantity, and the current vernier analog quantity.
